# EUROPÄISCHE PATENTSCHRIFT

(11) **EP 3 994 019 B1**
(45) Veröffentlichungstag und Bekanntmachung des Hinweises auf die Patenterteilung: **09.08.2023**
(21) Anmeldenummer: 20735365.7
(22) Anmeldetag: 29.06.2020
(51) Int. Cl.: B60K 11/08

(54) **VORRICHTUNG ZUM VERSCHLIESSEN EINES KRAFTFAHRZEUGKÜHLMODULS**
DEVICE FOR CLOSING A MOTOR VEHICLE COOLING MODULE
DISPOSITIF POUR OBTURER UN MODULE DE REFROIDISSEMENT DE VÉHICULE AUTOMOBILE

(30) Priorität: 03.07.2019 DE 102019117986
(43) Veröffentlichungstag der Anmeldung: 11.05.2022
(73) Patentinhaber: HBPO GmbH, 59557 Lippstadt (DE)
(72) Erfinder: SCHNEIDER, Christian, 33175 Bad Lippspringe (DE); BRÜCKNER, Reinhold, 33442 Herzebrock-Clarholz (DE)
(74) Vertreter: Bals & Vogel Patentanwälte PartGmbB
(86) Internationale Anmeldenummer: PCT/EP2020/068212
(87) Internationale Veröffentlichungsnummer: WO 2021/001301

(56) Entgegenhaltungen:
- DE-A1-102014 104 041
- DE-A1-102017 211 577
- DE-U1-202017 102 954
- FR-A1- 3 063 338

## Beschreibung

Die vorliegende Erfindung betrifft eine Vorrichtung zum Verschließen eines Kraftfahrzeugkühlmoduls.

In modernen Fahrzeugen, insbesondere in Kraftfahrzeugen, wird durch einen Kühlergrill des Fahrzeugs bzw. durch die Öffnungen des Kühlergrills einströmende Frischluft kanalisiert und auf ein Kühlmodul des Fahrzeugs geleitet. Insbesondere durch dieses gezielte kanalisierte Leiten des Luftstroms auf das Kühlmodul kann sichergestellt werden, dass entsprechend der Ausgestaltung des Kühlmoduls beispielsweise ein Motor des Fahrzeugs und/oder Ladeluft für diesen Motor effizient gekühlt und/oder der Fahrzeuginnenraum effizient klimatisiert werden kann.

Nachteiliger Weise werden durch den einströmenden Luftstrom turbulente Strömungen erzeugt, die einer Fortbewegung der betreffenden Fahrzeuge entgegenwirken und zu verringerten Reichweiten bzw. zu einem erhöhten Kraftstoffverbrauch führen. Um dieses Problem zu lösen, sind aus dem Stand der Technik Rollosysteme bekannt, die die innerhalb des Motorraums angeordneten Lufteinlässe bei Bedarf verschließen können und somit die Erzeugung turbulenter Strömungen reduzieren können. Die aus dem Stand der Technik bekannten Systeme zum Verschließen von im Motorraum angeordneten Lufteinlässen weisen jedoch das Problem auf, dass sie nicht in der Lage sind, lediglich an gegenüberliegenden Seiten entlang der Fahrzeugbreite symmetrisch zueinander angeordnete Teilbereiche eines Fahrzeuginnenraums bei Bedarf öffnen oder verschließen zu können. Beispielsweise sind in vielen Kraftfahrzeugen an den Außenbereichen der Kraftfahrzeugfrontbereiche Bremsluftkanäle angeordnet, die nachteiliger Weise in der Regel nicht separat verschließbar sind.

Vorrichtungen zum Verschließen eines Kraftfahrzeugkühlmoduls sind aus der FR 3 063 338 A1 und der DE 10 2014 104 041 A1 bekannt.

Es ist daher die Aufgabe der vorliegenden Erfindung, die voranstehend genannten Nachteile bekannter Verschlusssysteme zumindest teilweise zu beheben. Insbesondere ist es die Aufgabe der Erfindung, eine Vorrichtung zum Verschließen eines Kraftfahrzeugkühlmoduls zur Verfügung zu stellen, das in einfacher und kostengünstiger Weise, ein möglichst präzises, kontrollierbares und flexibel betreibbares Öffnen und Verschließen von entlang einer Fahrzeugbreite angeordneten Lufteinlässen eines Fahrzeugs ermöglicht.

Die voranstehende Aufgabe wird gelöst durch eine Vorrichtung mit den Merkmalen des unabhängigen Vorrichtungsanspruchs. Weitere Merkmale und Details der Erfindung ergeben sich aus den Unteransprüchen, der Beschreibung und den Zeichnungen.

Die gegenständliche Vorrichtung zum Verschließen eines Kraftfahrzeugkühlmoduls kann vorzugsweise im Frontbereich eines Kraftfahrzeugs, insbesondere zwischen einem Kühlergrill bzw. einer Fronthaube und einem Kraftfahrzeugkühlmodul angeordnet sein. Neben einem Einsatz in Personenkraftwagen und Lastkraftwagen kann die erfindungsgemäße Vorrichtung ebenso in anderen motorisierten Fahrzeugen, wie Schiffen oder Flugobjekten oder dergleichen eingesetzt werden. Bevorzugt kann der vorliegend von innen nach außen erfolgende Öffnungsvorgang und der von außen nach innen erfolgende Schließvorgang durch eine Interaktion zwischen den gegenständlichen Steuerelementen und den erfindungsgemäßen Führungselementen und den Verschlusselementen erfolgen, um entlang einer Fahrzeugbreite angeordnete Lufteinlässe zu verschließen oder zu öffnen. Derartige Lufteinlässe können beispielsweise in Form von Bremsluftkanälen oder Zuluftkanälen für den Motorraum bzw. für eine Klimaanlage oder dergleichen gebildet sein. Hierbei können die gegenständlichen Verschlusselemente vorzugsweise in beliebig viele Zwischenstellungen gebracht werden, sodass neben einem vollständig geöffneten und einem vollständig geschlossenen Zustand vorzugsweise auch teilweise geöffnete, bzw. teilweise geschlossene Zustände realisierbar sind. Unter einem Öffnen und einem Verschließen entlang einer Fahrzeugbreite ist im Rahmen der Erfindung insbesondere eine horizontale Bewegung in Bezug auf eine Fahrzeugbreite zu verstehen. Gemäß der gegenständlichen Anordnung ist das erstes Führungselement hierbei vorzugsweise zur Aufwicklung des ersten Verschlusselementes vorgesehen, während das zweite Führungselement zur Aufwicklung des zweiten Verschlusselementes vorgesehen ist.

Im Rahmen der Erfindung ist erkannt worden, dass durch eine Bewegung eines ersten und eines zweiten Verschlusselementes entlang einer Fahrzeugbreite, wobei die Bewegung von einer Fahrzeugmitte zu den Fahrzeugaußenbereichen gleichzeitig aus zwei entlang einer Fahrzeugbreite gegenüberliegend voneinander angeordneten Positionen symmetrisch aufeinander zulaufend oder voneinander weglaufend erfolgt, symmetrisch entlang einer Fahrzeugbreite angeordnete Teilbereiche eines Motorraums bedarfsgerecht gekühlt werden können. Insbesondere über die erfindungsgemäß vorgesehene Öffnung von einer Fahrzeugmitte zu den Fahrzeugaußenbereichen hin bzw. über das erfindungsgemäß vorgesehene Schließen von den Fahrzeugaußenbereichen zur Fahrzeugmitte hin ist es ferner möglich, lediglich einen mittig angeordneten Fahrzeugfrontbereich mit Kühlluft zu versorgen und beispielsweise ausschließlich in den Seitenbereichen einer Fahrzeugfront angeordnete Bremsluftkanäle von einer Belüftung ausschließen zu können, was sich für einige Anwendungen als vorteilhaft erwiesen hat.

Im Hinblick auf eine besonders leichtbauende Ausführung sowie einen zugleich einfachen und materialschonenden Öffnungs- und Schließvorgang, kann erfindungsgemäß insbesondere vorgesehen sein, dass die Verschlusselemente in Form eines Textils gebildet sind. Um eine möglichst effektive Abschirmung einer Luftströmung zu gewährleisten, sind die Verschlusselemente hierbei vorzugsweise in Form von zumindest teilweise luftundurchlässigen Textilien gebildet, die vorzugsweise aus einem synthetischen und möglichst reißfesten Material, wie beispielsweise Polyester oder Polyamid oder dergleichen gebildet sind. Hierbei können die Verschlusselemente auch mit einer zumindest teilweise luftundurchlässigen Beschichtung oder dergleichen versehen sein. Vorzugsweise weisen die Verschlusselemente ferner eine schmutzabweisende Oberfläche auf, bzw. sind mit einer schmutzabweisenden Beschichtung oder dergleichen versehen. Hinsichtlich einer einfachen und flexiblen Führung der Verschlusselemente während einer Öffnungs- und einer Schließbewegung können die Verschlusselemente zudem vorteilhafterweise eine Gewebedicke von 0,15 - 0,3 mm, insbesondere eine Gewebedicke von 0,25 mm besitzen.

Im Rahmen einer einfachen und kostengünstigen Art der Herstellung einer stabilen formschlüssigen Verbindung zwischen den gegenständlichen Verschlusselementen und den erfindungsgemäßen Führungselementen können die Verschlusselemente insbesondere endseitig gekederte Abschnitte zur Herstellung einer stabilen Verbindung mit den Führungselementen aufweisen, wobei die Abschnitte vorzugsweise zylinderförmig gekedert sein können. Die Keder können hierbei vorzugsweise in Form von Schienen, insbesondere in Form von Aluminiumschienen oder dergleichen ausgebildet sein.

Im Hinblick auf eine platzsparende und kompakte Anordnung sowie eine gleichzeitig effektive und verschleißarme Führung der Verschlusselemente während einer Öffnungs-und einer Schließbewegung, kann im Rahmen der Erfindung ebenfalls vorgesehen sein, dass die Führungselemente in Form einer Wickelwelle gebildet ist, auf die die Verschlusselemente während einer Öffnungsbewegung aufgewickelt werden und von der die Verschlusselemente während einer Schießbewegung abgewickelt werden.

Im Rahmen einer einfachen und kostengünstigen Art der Herstellung einer stabilen Verbindung zwischen den gegenständlichen Verschlusselementen und den erfindungsgemäßen Führungselementen können die vorzugsweise in Form von Wickelwellen gebildeten Führungselemente eine längsseitig angeordnete Ausnehmung zur Einführung der Verschlusselemente aufweisen, wobei die Ausnehmung vorzugsweise eine Verjüngung zur Fixierung der Verschlusselemente umfasst. Die längsseitig angeordnete Ausnehmung kann hierbei insbesondere in Form eines Schlitzes oder dergleichen ausgebildet sein, in den ein Verschlusselement eingeführt werden kann. Über eine Verjüngung des Schlitzes können die Verschlusselemente dann zudem auf einfache Weise befestigt werden. Hierbei bietet sich insbesondere eine Fixierung der Verschlusselemente über das Einklemmen eines endseitig gekederten Abschnitts der Verschlusselemente an.

Im Rahmen einer einfachen und stabilen Führung der gegenständlichen Vorrichtung kann erfindungsgemäß ferner vorgesehen sein, dass die Führungselemente an den Außenbereichen der Vorrichtung angeordnet sind, wobei die Führungselemente vorzugsweise denselben Abstand zur Mitte der Vorrichtung aufweisen. Die vorzugsweise in Form von Wickelwellen gebildeten Führungselemente sind hierbei vorteilhafterweise vertikal ausgerichtet, wobei das erste Führungselement bzw. die erste Wickelwelle insbesondere zur Auf- und Abwicklung des ersten Verschlusselementes vorgesehen ist, wohingegen das zweite Führungselement bzw. die zweite Wickelwelle insbesondere zur Auf- und Abwicklung des zweiten Verschlusselementes vorgesehen ist.

Im Hinblick auf eine platzsparende und kompakte Anordnung sowie eine gleichzeitig präzise, effektive und verschleißarme Steuerung der Verschlusselemente während einer Öffnungs-und einer Schließbewegung, ist erfindungsgemäß vorgesehen, dass die Steuerelemente in Form von Wellen und jeweils an den Wellen angeordneten Seilzügen gebildet sind. Vorzugsweise sind zwei Seilzüge für das erste Steuerelement und zwei Seilzüge für das zweite Steuerelement vorgesehen. Die Seilzüge können hierbei vorzugsweise in Form von dünnen und stabilen Drähten, insbesondere in Form von Feinseilen aus Edelstahl oder dergleichen gebildet sein.

Im Rahmen einer besonders stabilen und robusten Ausführung können die Seilzüge auch in Form von Bowdenzügen oder dergleichen gebildet sein.

Im Hinblick auf eine platzsparende, kompakte und stabil steuerbare Anordnung, ist es insbesondere vorteilhaft, wenn das erste Steuerelement zum Schließen der Verschlusselemente vorgesehen ist, wobei das erste Steuerelement derart mit den Verschlusselementen verbunden ist, dass die Verschlusselemente während einer Schließbewegung von den Führungselementen abwickelbar sind, während die Seilzüge des ersten Steuerelementes auf das erste Steuerelement aufwickelbar sind.

Erfindungsgemäß ist im Hinblick auf eine platzsparende, kompakte und stabil steuerbare Anordnung vorgesehen, dass das zweite Steuerelement zum Öffnen der Verschlusselemente vorgesehen ist, wobei das zweite Steuerelement derart mit den Verschlusselementen verbunden ist, dass die Verschlusselemente während einer Öffnungsbewegung auf die Führungselemente aufwickelbar sind, während die Seilzüge des zweiten Steuerelementes zumindest teilweise von dem zweiten Steuerelement abwickelbar sind.

Im Rahmen einer zuverlässigen und stabilen Steuerung einer Öffnungs- und einer Schließbewegung der gegenständlichen Verschlusselemente kann erfindungsgemäß insbesondere vorgesehen sein, dass das zweite Steuerelement einen ersten zentral angeordneten Teil und jeweils einen in den Außenbereichen, vorzugsweise an dem ersten und zweiten Führungselement angeordneten zweiten Teil aufweist, wobei der erste Teil mit den beiden zweiten Teilen vorzugsweise über Seilzüge verbunden ist. Während einer Öffnungsbewegung werden die Seilzüge hierbei insbesondere von dem zentral angeordneten ersten Teil abgewickelt und auf die in den Außenbereichen angeordneten zweiten Teile aufgewickelt. Bei einer Schließbewegung verhält es sich vorteilhafterweise entsprechend umgekehrt.

Im Hinblick auf eine möglichst konstante Zugspannung auf die Verschlusselemente während eines Öffnungs- und eines Schließvorgangs kann erfindungsgemäß ferner vorgesehen sein, dass die Steuerelemente zumindest teilweise konisch geformt, vorzugsweise doppelkonisch geformt sind, wobei ein erster konisch geformter Teil insbesondere entlang eines taillierten Bereichs mit einem zweiten konisch geformten Teil verbunden ist. Die Konifizierung dient hierbei insbesondere der Kompensation einer Durchmesserzunahme bzw. einer Durchmesserabnahme durch das Ab- und Aufwickeln der Verschlusselemente um die Führungselemente.

Um eine stabile Befestigung der Verschlusselemente an die Steuerelemente zu gewährleisten, ist es ferner denkbar, dass eine erste und zweite Abschlussleiste zur Befestigung der Verschlusselemente an die Steuerelemente vorgesehen ist. Die Abschlussleisten können vorzugweise aus Kunststoff gebildet sein und insbesondere lösbar mit den Verschlusselementen verbunden sein. Die Abschlussleisten können hierbei vorzugsweise Löcher zum Befestigen eines Seilzuges oder dergleichen umfassen, die vorzugsweise entlang der Abschlussleisten senkrecht zu Öffnungs- oder Schließbewegung der Verschlusselemente angeordnet sind.

Im Rahmen einer besonders einfachen, insbesondere lösbaren Verbindung zwischen den Abschlussleisten und den Verschlusselementen kann erfindungsgemäß insbesondere vorgesehen sein, dass die Abschlussleisten ein erstes Abschlussleistenelement und ein zweites Abschlussleistenelement zur Befestigung der Verschlusselemente aufweisen, wobei die Verschlusselemente vorzugsweise zwischen dem ersten und zweiten Abschlussleistenelement einklemmbar sind.

Hierbei ist es insbesondere denkbar, dass die Abschlussleisten Clipsverbindungen zur Befestigung der Verschlusselemente aufweist, wobei die Clipsverbindungen vorzugsweise in Form von in dem ersten Abschlussleistenelement angeordneten Clipsen und in einem zweiten Abschlussleistenelement angeordneten korrespondierenden Ausnehmungen gebildet sind. Eine derartige Ausführung mit Clipsverbindungen erlaubt insbesondere einen Verzicht auf jegliche andere Verbindungselemente, die im Falle von lösbaren Verbindungselementen häufig verloren gehen können oder im Falle von unlösbaren Verbindungen keinen Austausch gegenständlicher Verschlusselemente ermöglichen.

Im Hinblick auf eine stabile Führung der gegenständlichen Verschlusselemente während einer Öffnungs- und einer Schließbewegung, kann erfindungsgemäß ferner vorgesehen sein, dass die Abschlussleisten ein Zwischenelement zur Stabilisierung einer Führung aufweisen, wobei das Zwischenelement vorzugsweise in Form einer T-Profil-förmigen Führung gebildet sein kann.

Zwecks Ausübung einer dauerhaften Zugspannung während eines Öffnungs- und eines Schließvorgangs, kann erfindungsgemäß ferner vorgesehen sein, dass ein Zugmittel zur Verbindung der Abschlussleisten und/oder der Verschlusselemente mit dem ersten Steuerelement vorgesehen ist, wobei das Zugmittel vorzugsweise in Form eines Federelementes, insbesondere in Form einer Zugfeder gebildet ist. Im Hinblick auf eine konstruktiv besonders einfache Ausführung können die Verschlusselemente hierbei beispielsweise über Zugfedern mit dem ersten und zweiten Seilzug verbunden sein. Hinsichtlich einer sinnvollen Auswahl von Zugmitteln bieten sich für gängige Anwendungen von Verschlusssystemen für Kraftfahrzeugkühlmodule vorteilhafterweise Zugmittel zur Ausübung einer Zug- bzw. Federkraft von 20 - 50 N, vorzugsweise von 30 - 40 N, insbesondere zur Ausübung einer Zug- bzw. Federkraft von 35 N an.

Im Rahmen einer konstruktiv einfach herstellbaren Verbindung zwischen dem ersten Steuerelement und den Verschlusselementen ist es ferner denkbar, dass die Abschlussleisten eine Ausnehmung zur Einführung des Seilzuges des ersten Steuermittels aufweisen, wobei die Ausnehmung vorzugsweise gegenüberliegend von einer Clipsverbindungsstelle angeordnet ist. Vorzugweise sind die Abschlussleisten derart ausgebildet, dass sie eine Aufnahme eines Zugelementes sowie die Einführung eines Seilzuges des ersten Steuerelementes ermöglichen, sodass die Abschlussleisten an der einen Seite vorzugsweise über eine Clipsverbindung jeweils mit einem gegenständlichen Verschlusselement verbunden sein kann und an der anderen Seite über ein Zugmittel mit dem ersten Steuerelement verbunden ist, wobei das Zugmittel im Rahmen einer kompakten Anordnung vorzugsweise innerhalb der Abschlussleisten angeordnet sein kann.

Um ein fernsteuerbares Öffnen und Verschließen eines Verschlusselementes zu gewährleisten, ist es ferner vorteilhaft, wenn ein Antriebsmittel zum Antreiben der Steuerelemente vorgesehen ist. Hierbei kann das Antriebsmittel vorzugsweise in Form eines Aktuators, insbesondere in Form eines Rotationsachsaktuators gebildet sein, der das für eine Bewegung der Verschlusselemente nötige Drehmoment bereitstellt.

Im Rahmen eines besonders effektiven, energie- und platzsparenden Antriebes kann erfindungsgemäß insbesondere vorgesehen sein, dass eine zentral angeordnete Antriebswelle vorgesehen ist, wobei die Antriebswelle vorzugsweise das Antriebsmittel und/oder das erste Steuerelement und/oder zumindest Teile des zweiten Steuerelementes, insbesondere den ersten Teil des zweiten Steuerelementes umfasst.

Im Hinblick auf eine stabile und verschleißarme Anordnung, die selbst größeren Kräften standhält, kann erfindungsgemäß ferner vorgesehen sein, dass ein Rahmen und/oder ein Gitter zur Aufnahme und zur Abstützung der Verschlusselemente vorgesehen ist. Neben einer Aufnahme bzw. Abstützung der Verschlusselemente kann der Rahmen und/oder das Gitter auch zur Anordnung bzw. Befestigung der Führungselemente und/oder des Antriebselementes oder dergleichen vorgesehen sein. Alternativ oder kumulativ zu einem Gitter kann auch eine andersgeartete Abstützung, beispielsweise ein gekrümmte und/oder bombierte Abstützung vorgesehen sein, die die Verschlusselemente fortlaufend unter einer leichten Vorspannung hält.

Im Hinblick auf eine automatisierte Anpassung der Positionierung der erfindungsgemäßen Vorrichtung an bestimmbare Größen, wie eine aktuelle Geschwindigkeit, einen aktuellen Verbrauch, eine aktuelle Außentemperatur, eine aktuelle Motortemperatur, eine aktuelle Bremsbeanspruchung, eine aktuelle Tankfüllung oder dergleichen, kann des Weiteren vorteilhafterweise vorgesehen sein, dass eine Detektionseinheit zur Erfassung von Daten zu Bestimmung einer aktuellen Position der Verschlusselemente in Bezug auf eine Fahrzeugbreite und/oder einer aktuellen Temperatur und/oder einer aktuellen Zugspannung und/oder einer aktuellen Geschwindigkeit und/oder eines aktuellen Energieverbrauchs vorgesehen ist. Bevorzugt kann dabei im Rahmen der Erfindung vorgesehen sein, dass die Detektioneinheit zumindest einen Sensor zur Erfassung benannter Daten aufweist. Hierbei kann es hinsichtlich einer kompakten und leicht austauschbaren Ausführung insbesondere vorteilhaft sein, wenn die Detektionseinheit in der erfindungsgemäßen Vorrichtung zum Verschließen eines Kraftfahrzeugkühlmoduls angeordnet ist. Alternativ kann die Detektionseinheit auch entfernt von der Vorrichtung angeordnet und vorzugsweise in eine Kontrolleinheit oder dergleichen integriert sein. Bezüglich einer automatisierbaren Anpassung einer Positionierung der erfindungsgemäßen Vorrichtung kann hierbei vorteilhafterweise insbesondere eine Interaktion von Sensoren der Detektionseinheit mit innerhalb eines Fahrzeugs angeordneten Sensoren erfolgen, sodass auf einfache Weise auf bereits vorhandene Sensorik zurückgegriffen werden kann.

Im Hinblick auf eine besonders exakte Bestimmung bzw. eine möglichst exakt kontrollierbare Steuerung einer Positionierung der erfindungsgemäßen Vorrichtung kann vorteilhafterweise ferner vorgesehen sein, dass eine Verarbeitungseinheit zur Aussendung eines Steuerbefehls an das Antriebsmittel auf Basis der erfassten Daten vorgesehen ist. Die Verarbeitungseinheit ist hierbei vorteilhafterweise in der Lage, Daten auf Basis von mehreren Sensoren zu verarbeiten, beispielsweise zu mitteln, zu gewichten oder dergleichen, um zusätzlich die Aussagekraft der Daten zu erhöhen, bevor anhand der Verarbeitung ein Steuerbefehl an das Antriebsmittel ausgegeben wird. Für eine reibungslose Steuerung und Kommunikation der einzelnen Komponenten, wie der Detektionseinheit, der Verarbeitungseinheit und der verschiedenen Sensoren untereinander, können die Komponenten im Rahmen einer drahtgebundenen Ausführung vorzugsweise mittels einer Kommunikations- und Steuerleitung miteinander verbunden sein. Im Hinblick auf eine besonders flexible, unkomplizierte und effiziente Kommunikation der einzelnen Systemeinheiten, können die einzelnen Komponenten vorzugsweise drahtlos bzw. kontaktlos auf Server- bzw. Cloud-Basis und/oder via Internet miteinander kommunizieren.

Ebenfalls Gegenstand der Erfindung ist zudem ein Kraftfahrzeug, umfassend eine voranstehend beschriebenen Vorrichtung zum Verschließen eines Kraftfahrzeug.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

In den Figuren zeigen:
- Fig. 1: eine schematische Darstellung einer erfindungsgemäßen Vorrichtung zum Verschließen eines Kraftfahrzeugkühlmoduls in einem vollständig geschlossenen Zustand in einer Vorderansicht gemäß einem ersten Ausführungsbeispiel,
- Fig. 2: eine schematische Darstellung einer erfindungsgemäßen Vorrichtung zum Verschließen eines Kraftfahrzeugkühlmoduls in einem vollständig geschlossenen Zustand in einer Rückansicht gemäß einem zweiten Ausführungsbeispiel,
- Fig.3: eine schematische Darstellung einer erfindungsgemäßen Vorrichtung zum Verschließen eines Kraftfahrzeugkühlmoduls in einem vollständig geöffneten Zustand in einer Vorderansicht gemäß einem ersten Ausführungsbeispiel,
- Fig. 4: eine schematische Darstellung einer erfindungsgemäßen Vorrichtung zum Verschließen eines Kraftfahrzeugkühlmoduls in einem teilweise geschlossenen Zustand in einer Vorderansicht gemäß einem ersten Ausführungsbeispiel,
- Fig. 5: eine schematische Darstellung eines Teils der erfindungsgemäßen Vorrichtung zum Verschließen eines Kraftfahrzeugkühlmoduls in einem vollständig geschlossenen Zustand in einer Rückansicht gemäß einem ersten Ausführungsbeispiel,
- Fig. 6 a,b: eine schematische Darstellung einer erfindungsgemäßen Abschlussleiste in einem geöffneten und einem geschlossenen Zustand,
- Fig. 7 a,b: eine schematische Darstellung der erfindungsgemäßen Steuerelemente zur Steuerung einer Öffnungs- und einer Schließbewegung eines erfindungsgemäßen Verschlusselementes,
- Fig. 8: eine schematische Darstellung eines Teils der erfindungsgemäßen Vorrichtung zum Verschließen eines Kraftfahrzeugkühlmoduls in einem vollständig geöffneten Zustand in einer Vorderansicht gemäß einem ersten Ausführungsbeispiel,
- Fig. 9: eine schematische Darstellung eines Teils der erfindungsgemäßen Vorrichtung zum Verschließen eines Kraftfahrzeug-Modul in einem vollständig geöffneten Zustand in einer Rückansicht gemäß einem ersten Ausführungsbeispiel.

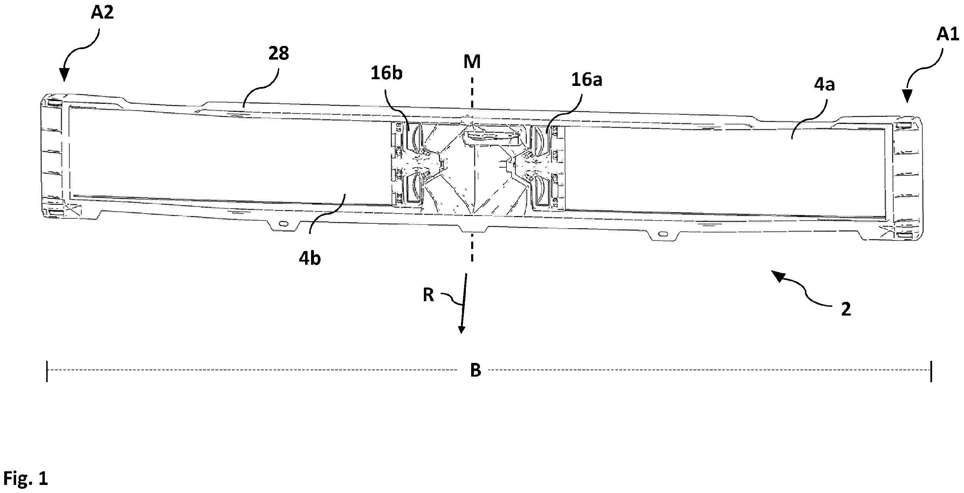

Fig. 1 zeigt eine schematische Darstellung einer erfindungsgemäßen Vorrichtung 2 zum Verschließen eines Kraftfahrzeugkühlmoduls in einem vollständig geschlossenen Zustand in einer Vorderansicht gemäß einem ersten Ausführungsbeispiel.

Entsprechend der Vorderansicht zeigt der die Fahrtrichtung R anzeigende Pfeil vorliegend aus der Blattebene hinaus.

Die gegenständliche Vorrichtung 2 zeigt die Anordnung eines ersten und zweiten Verschlusselementes 4a, 4b sowie jeweils eine an dem ersten und zweiten Verschlusselement 4a, 4b angeordnete erste und zweite Abschlussleiste 16a, 16b. Die Verschlusselemente 4a, 4b sind hierbei jeweils entlang einer Fahrzeugbreite B öffenbar und verschließbar und können somit jeweils zwischen einer Fahrzeugmittel M und den Außenbereichen A1 und A2 entlang der Fahrzeugbreite B verschoben werden. Zur Aufnahme und zur Abstützung der Verschlusselemente 4a, 4b weist die Vorrichtung 2 zudem einen Rahmen 28 auf, der dafür sorgt, dass die gegenständliche Vorrichtung 2 selbst größeren Kräften standhält und innerhalb einer Fahrzeugfront angeordnete Lufteinlässe 6 selbst bei höheren Fahrtgeschwindigkeiten eines Kraftfahrzeugs verschließen kann.

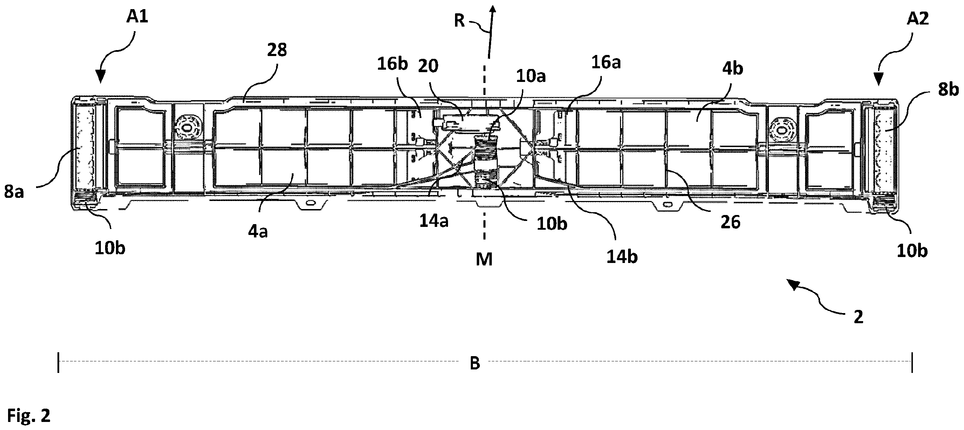

Fig. 2 zeigt eine schematische Darstellung einer erfindungsgemäßen Vorrichtung 2 zum Verschließen eines Kraftfahrzeugkühlmoduls in einem vollständig geschlossenen Zustand in einer Rückansicht gemäß einem ersten Ausführungsbeispiel. Entsprechend der Rückansicht zeigt der die Fahrtrichtung R anzeigen Pfeil hierbei in die Blattebene hinein.

Wie in der Rückansicht zu erkennen, weist die Vorrichtung 2 neben den Verschlusselementen 4a und 4b zum Verschließen von Lufteinläsen 6 noch ein erstes und zweites Steuerelement 10a, 10b zur Steuerung einer Öffnungs- und einer Schließbewegung der Verschlusselemente 4a, 4b sowie ein jeweils an den Außenbereichen A1 und A2 angeordnetes erstes und zweites Führungselement 8a, 8b zur Führung der Verschlusselemente 4a, 4b während einer Öffnungs- und einer Schließbewegung auf. Die Verschlusselemente 4a, 4b und die Führungselement 8a, 8b sind hierbei derart zueinander angeordnet und von den Steuerelementen 10a, 10b steuerbar, dass Lufteinlässe 6 in einem Kraftfahrzeug durch die Verschlusselemente 4a, 4b entlang einer Fahrzeugbreite B öffenbar und verschließbar sind, wobei gleichzeitig zwei entlang einer Fahrzeugbreite B gegenüberliegend voneinander angeordneten Lufteinlässe 6 durch die Verschlusselemente 4a, 4b öffenbar und verschließbar sind. Ferner sind die Verschlusselemente 4a, 4b und die Führungselemente 8a, 8b derart zueinander angeordnet und von den Steuerelementen 10a, 10b steuerbar, dass die Verschlusselemente 4a, 4b während einer Öffnungsbewegung von der Fahrzeugmitte zu den Fahrzeugaußenbereichen A1, A2 hin und während einer Schließbewegung von den Fahrzeugaußenbereichen A1, A2 zur Fahrzeugmitte hin bewegbar sind.

Die gegenständlichen Verschlusselemente 4a, 4b können hierbei vorzugsweise in Form eines Textils, insbesondere in Form eines zumindest teilweise luftundurchlässigen Textils, wie beispielsweise eines Polyester- oder Polyamidmaterials gebildet sein. Die erfindungsgemäßen Steuerelemente 10a, 10b sind vorliegend in Form von Wellen und jeweils an den Wellen angeordneten Seilzügen 14a, 14b gebildet, wobei vorzugsweise zwei Seilzüge 14 a für das erste Steuerelement 10a und zwei Seilzüge 14b für das zweite Steuerelement 10b vorgesehen sind. Die Seilzüge 14a, 14b können hierbei insbesondere in Form von Bowdenzügen gebildet sein. Vorliegend ist das erste Steuerelement 10a zum Schließen der Verschlusselemente 4a, 4b vorgesehen, wobei das erste Steuerelement 10a hierbei derart mit den Verschlusselementen 4a, 4b verbunden ist, dass die Verschlusselemente 4a, 4b während einer Schließbewegung von den Führungselementen 8a, 8b abwickelbar sind, während die Seilzüge 14a des ersten Steuerelementes 10a auf das erste Steuerelement 10a aufwickelbar sind.

Das zweite Steuerelement 10b ist ferner zum Öffnen der Verschlusselemente 4a, 4b vorgesehen, wobei das zweite Steuerelement 10b hierbei derart mit den Verschlusselementen 4a, 4b verbunden ist, dass die Verschlusselemente 4a, 4b während einer Öffnungsbewegung auf die Führungselemente 8a, 8b aufwickelbar sind, während die Seilzüge 14b der zweiten Steuerelemente 10b zumindest teilweise von den zweiten Steuerelementen 10b abwickelbar sind.

Das zweite Steuerelement 10b weist hierbei einen zentral angeordneten ersten Teil und jeweils einen in den Außenbereichen A1, A2, vorliegend an einem ersten und zweiten Führungselement 8a, 8b angeordneten zweiten Teil auf, wobei der erste Teil mit den beiden zweiten Teilen vorliegend über die Seilzüge 14b verbunden ist. Die Steuerelemente 10a, 10b sind hierbei teilweise konisch geformt, insbesondere doppelkonisch geformt, wobei ein erster konisch geformter Teil hierbei insbesondere entlang eines taillierten Bereichs mit einem zweiten konisch geformten Bereich verbunden ist. Die Konifizierung dient hierbei insbesondere der Kompensation einer Durchmesserzunahme bzw. der Durchmesserabnahme durch das Ab- und Aufwickeln der Verschlusselemente 4a, 4b um die Führungselemente 8a, 8b.

Neben dem Rahmen 28 ist vorliegend noch ein Gitter 26 zur Aufnahme und Abstützung der Verschlusselemente 4a, 4b vorgesehen. Alternativ oder kumulativ zu einem Gitter 26 kann auch eine anders geartete Abstützung, beispielsweise eine gekrümmte und/oder bombierte Abstützung oder dergleichen vorgesehen sein, die die Verschlusselemente 4a, 4b fortlaufend unter einer leichten Vorspannung hält. An den zentral angeordneten Steuerelementen 10a, 10b ist ferner ein Antriebsmittel 20 zum Antreiben der Steuerelemente 10a, 10b vorgesehen, das vorliegend in Form eines Rotationsaktuators gebildet ist. Der Rotationsaktuator treibt die Steuerelemente 10a, 10b an, indem er das für einen Öffnungs- bzw. einen Schließvorgang nötige Drehmoment bereitstellt.

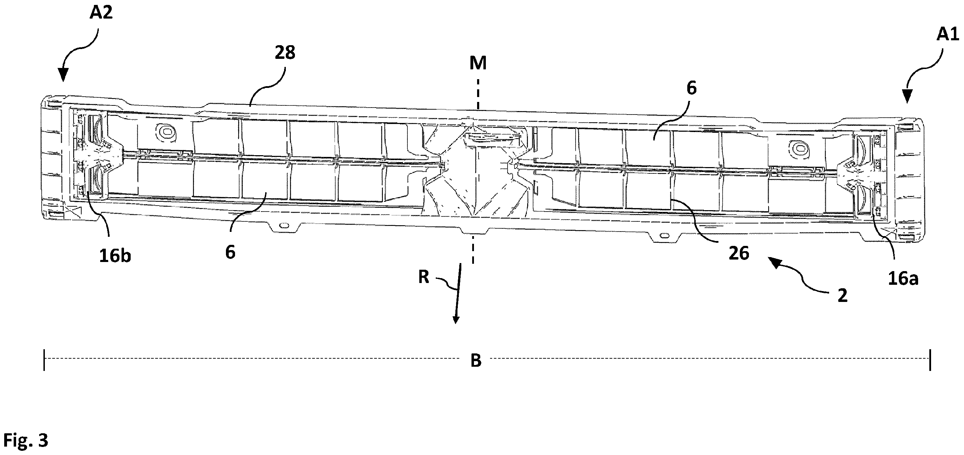

Fig. 3 zeigt eine schematische Darstellung einer erfindungsgemäßen Vorrichtung 2 zum Verschließen eines Kraftfahrzeugkühlmoduls in einem vollständig geöffneten Zustand in einer Vorderansicht gemäß einem ersten Ausführungsbeispiel. Entsprechend dem vollständig geöffneten Zustand befinden sich die Abschlussleisten 16a, 16b in den Außenbereichen A2, A1 und die Verschlusselemente 4a, 4b in einem vollständig aufgewickelten Zustand auf den vorliegend in der Vorderansicht nicht sichtbaren Führungselementen 8a, 8b. In dem vorliegend dargestellten vollständig geöffneten Zustand sind ferner Luftanlässe 6 zu erkennen, die mittels der gegenständlichen Vorrichtung 2 wahlweise geöffnet und verschlossen werden sollen.

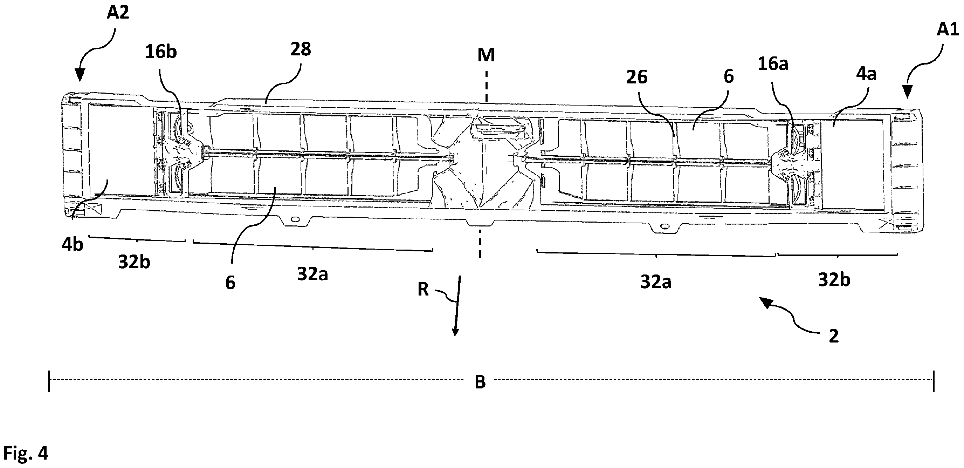

Fig. 4 zeigt eine schematische Darstellung einer erfindungsgemäßen Vorrichtung 2 zum Verschließen eines Kraftfahrzeugkühlmoduls in einem teilweise geschlossenen bzw. teilweise geöffneten Zustand in einer Vorderansicht gemäß einem ersten Ausführungsbeispiel. Hierbei ist jeweils nur lediglich ein zweiter Öffnungsbereich 32b durch die Verschlusselemente 4a, 4b verschlossen, wohingegen ein jeweils zentral angeordneter erster Öffnungsbereich 32a nicht verschlossen ist und somit durch den Eintritt von Luft durch die Lufteinlässe 6 gekühlt werden kann. Es hat sich herausgestellt, dass eine solche Anordnung, in der beispielsweise lediglich in den Außenbereichen A1, A2 angeordnete Bremsluftkanäle von den Verschlusselementen 4a, 4b verschlossen sind, vorteilhaft sein kann.

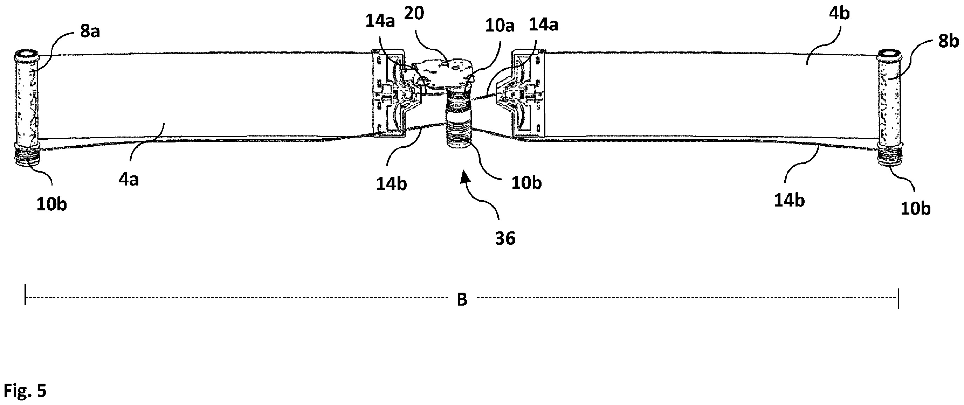

Fig. 5 zeigt eine schematische Darstellung eines Teils der erfindungsgemäßen Vorrichtung 2 zum Verschließen eines Kraftfahrzeugkühlmoduls in einem vollständig geschlossenen Zustand in einer Rückansicht gemäß einem ersten Ausführungsbeispiel.

Gemäß dieser Teildarstellung sind lediglich die Verschlusselemente 4a, 4b, die Führungselemente 8a, 8b sowie das erste und zweite Antriebselement 10a, 10b zur Steuerung der Verschlusselemente 4a, 4b dargestellt. Wie vorliegend zu erkennen, sind die Steuerelemente 10a, 10b in Form von Wellen und jeweils an den Wellen angeordneten Seilzügen 14a, 14b gebildet, wobei jeweils zwei Seilzüge 14a für das erste Steuerelement 10a und zwei Seilzüge 14b für das zweite Steuerelement 10b vorgesehen sind. Das erste Steuerelement 10a ist hierbei zum Schließen der Verschlusselemente 4a, 4b vorgesehen, wohingegen das zweite Steuerelement 14b zum Öffnen der Verschlusselemente 4a, 4b vorgesehen ist und einen ersten zentral angeordneten Teil und jeweils einen in den Außenbereichen A1, A2, vorliegend an dem ersten und zweiten Führungselement 8a, 8b angeordneten zweiten Teil aufweist, wobei der erste Teil mit den beiden zweiten Teilen vorliegend über die Seilzüge 14b verbunden ist. Zudem ist vorliegend das Antriebsmittel 20, das vorliegend in Form eines Aktuators gebildet ist, zu erkennen, das zusammen mit dem ersten Steuerelement 10a und dem ersten Teil des zweiten Steuerelementes 10b auf der zentral angeordneten Antriebswelle 36 angeordnet ist.

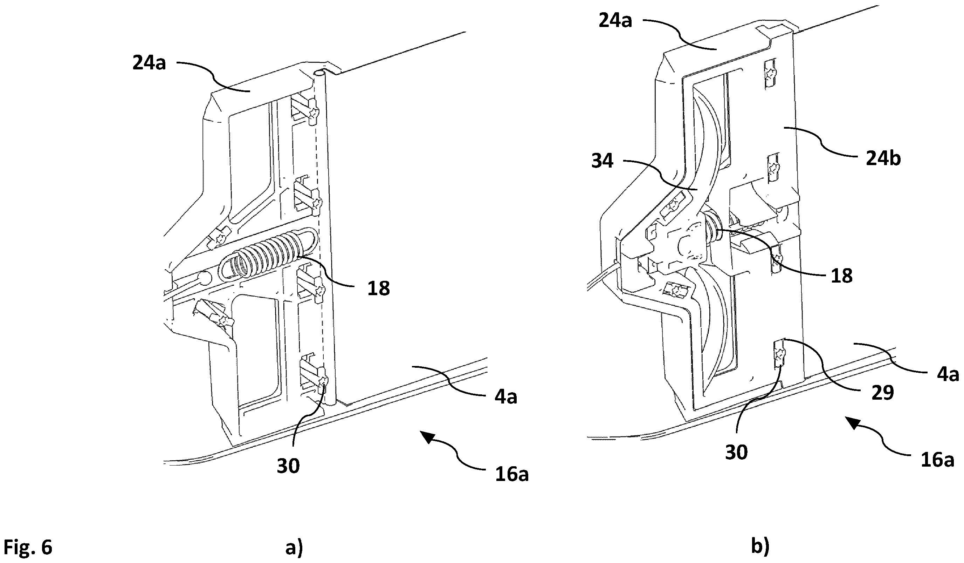

Figuren 6a und 6b zeigen eine schematische Darstellung einer erfindungsgemäßen Abschlussleiste 16a in einem geöffneten und einem geschlossenen Zustand.

Die Abschlussleisten 16a, 16b sind gegenständlich zur Befestigung der Verschlusselemente 4a, 4b an die Steuerelemente 10a, 10b vorgesehen, wobei die Abschlussleisten 16a, 16b ein erstes Abschlussleistenelement 24a und ein zweites Abschlussleistenelement 24b zur Befestigung der Verschlusselemente 4a, 4b aufweisen, wobei die Verschlusselemente 4a, 4b vorzugsweise zwischen dem ersten und zweiten Abschlussleistenelement 24a, 24b einklemmbar sind. Wie vorliegend anhand einer Darstellung der ersten Abschlussleiste 16a dargestellt, kann die Abschlussleiste 16a Clipsverbindungen 29, 30 zur Befestigung der Verschlusselemente 4a, 4b aufweisen, wobei die Clipsverbindungen 29, 30 insbesondere in Form von in dem ersten Abschlussleistenelement 24a angeordneten Clipsen 30 und in dem zweiten Abschlussleistenelement 24b angeordneten korrespondierenden Ausnehmungen 29 gebildet sind. Ferner ist vorliegend das zur Verbindung der Abschlussleisten 16a, 16b und/oder der Verschlusselemente 4a, 4b mit dem ersten Steuerelement 10a vorgesehene Zugmittel 18 zu erkennen, das vorliegend in Form einer Zugfeder gebildet ist,.

In dem vorliegend dargestellten geöffneten Zustand gemäß Fig. 6a kann ein Verschlusselement 4a, 4b auf einfache Weise in die Abschlussleiste 16a eingelegt werden und dann über das Aufsetzen des zweiten Abschlussleistenelementes 24b gemäß Fig. 6b formschlüssig in der Abschlussleiste 16a befestigt werden.

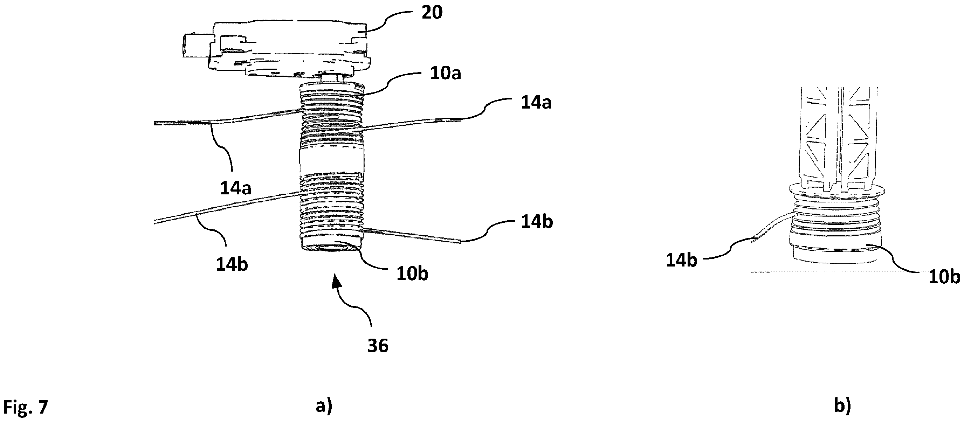

Figuren 7a und 7b zeigen eine schematische Darstellung der erfindungsgemäßen Steuerelemente 10a, 10b zur Steuerung einer Öffnungs- und einer Schließbewegung eines erfindungsgemäßen Verschlusselementes 4a, 4b.

In Figur 7a ist hier noch einmal die auf einer Antriebswelle 36 angeordnete Anordnung eines Antriebsmittels 20 eines ersten Steuerelementes 10a mit Seilzügen 14a sowie des ersten Teils des zweiten Steuerelementes 10b mit Seilzügen 14b zur Verbindung mit dem in Fig. 7b dargestellten zweiten Teil des zweiten Steuerelementes 10b dargestellt.

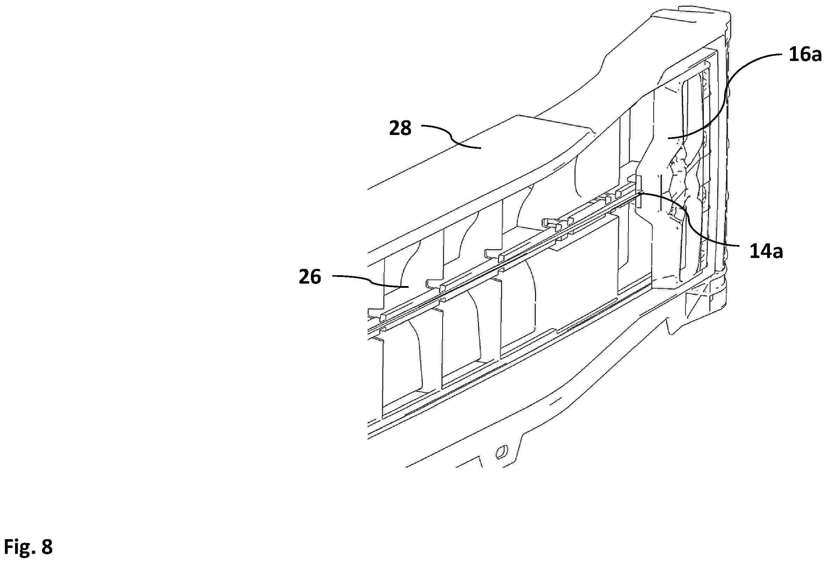

Fig. 8 zeigt eine schematische Darstellung eines Teils der erfindungsgemäßen Vorrichtung 2 zum Verschließen eines Kraftfahrzeugkühlmoduls in einem vollständig geöffneten Zustand in einer Vorderansicht gemäß einem ersten Ausführungsbeispiel.

Gemäß dieser Ansicht ist insbesondere die Anordnung des innerhalb des Rahmens 28 geführten Seilzuges 14a sowie dessen Verbindung zu der ersten Abschlussleiste 16a zu erkennen.

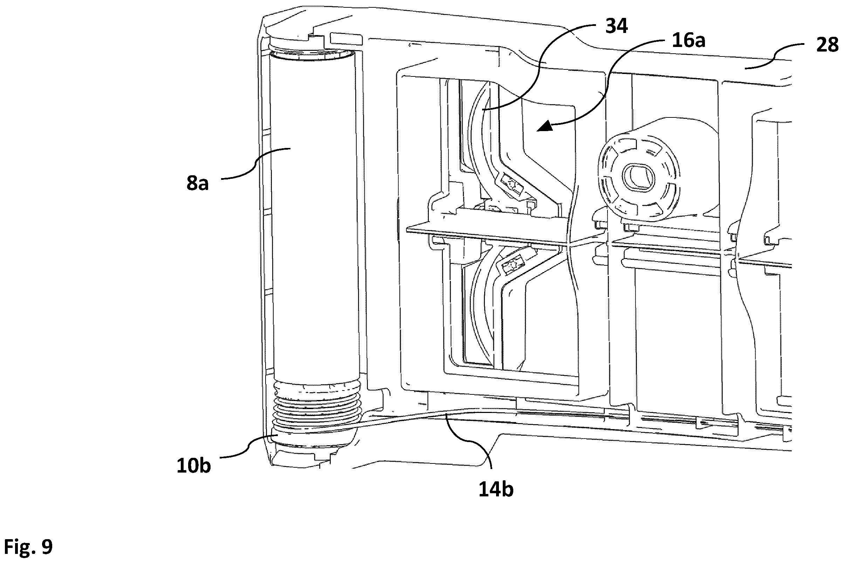

Fig. 9 zeigt eine schematische Darstellung eines Teils der erfindungsgemäßen Vorrichtung 2 zum Verschließen eines Kraftfahrzeugkühlmoduls in einem vollständig geöffneten Zustand in einer Rückansicht gemäß einem ersten Ausführungsbeispiel

Gemäß dieser Darstellung ist neben dem ebenfalls innerhalb des Rahmens 28 geführten Seilzug 14b des zweiten Steuerelementes 10b, das innerhalb der ersten Abschlussleiste 16a angeordnete Zwischenelement 34 zur Stabilisierung einer Führung der Verschlusselemente 4a, 4b zu erkennen, das vorliegend in Form einer T-Profil-förmigen Führung gebildet ist und Teil der Abschlussleiste 16a ist.

Mittels der erfindungsgemäßen Vorrichtung 2 ist es insbesondere möglich, durch eine Bewegung eines ersten und zweiten Verschlusselementes 4a, 4b entlang einer Fahrzeugbreite B, wobei die Bewegung gleichzeitig aus zwei entlang einer Fahrzeugbreite B gegenüberliegend voneinander angeordneten Positionen symmetrisch aufeinander zulaufend oder voneinander weglaufend erfolgt, symmetrisch entlang einer Fahrzeugbreite B angeordnete Teilbereiche eines Motorraums bedarfsgerecht zu kühlen. Insbesondere ist es mittels der erfindungsgemäß vorgesehenen Öffnung von einer Fahrzeugmitte M zu den Fahrzeugaußenbereichen A1, A2 hin bzw. mittels des erfindungsgemäß vorgesehenen Schließens von den Fahrzeugaußenbereichen A1, A2 zur Fahrzeugmitte M hin möglich, lediglich einen mittig angeordneten Fahrzeugfrontbereich mit Kühlluft zu versorgen und entsprechend in den Außenbereichen einer Fahrzeugfront angeordnete Teile von einer Belüftung ausschließen zu können, was sich für einige Anwendungen als besonders vorteilhaft erwiesen hat.

### Bezuaszeichenliste

- 2: Vorrichtung zum Verschließen eines Kraftfahrzeugkühlmoduls
- 4a: erstes Verschlusselement
- 4b: zweites Verschlusselement
- 6: Lufteinlässe
- 8a: erstes Führungselement
- 8b: zweites Führungselement
- 10a: erstes Steuerelement
- 10b: zweites Steuerelement
- 14a: Seilzug des ersten Steuerelementes
- 14b: Seilzug des zweiten Steuerelementes
- 16a: erste Abschlussleiste
- 16b: zweite Abschlussleiste
- 20: Antriebsmittel
- 24a: erstes Abschlussleistenelement
- 24b: zweites Abschlussleistenelement
- 26: Gitter
- 28: Rahmen
- 29: Ausnehmungen
- 30: Clipsverbinder
- 32a: erster Öffnungsbereich
- 32b: zweiter Öffnungsbereich
- 34: Zwischenelement
- 36: Antriebswelle

- R: Fahrtrichtung
- B: Fahrzeugbreite
- M: Mitte
- A1: erster Außenbereich
- A2: zweiter Außenbereich

## Patentansprüche

1. Vorrichtung (2) zum Verschließen eines Kraftfahrzeugkühlmoduls, umfassend
- ein erstes und zweites Verschlusselement (4a, 4b) zum Verschließen von Lufteinlässen (6) in einem Kraftfahrzeug,
- ein erstes und zweites Führungselement (8a, 8b) zur Führung der Verschlusselemente (4a, 4b) während einer Öffnungs- und einer Schließbewegung,
- ein erstes und zweites Steuerelement (10a, 10b) zur Steuerung einer Öffnungs- und einer Schließbewegung der Verschlusselemente (4a, 4b), wobei die Steuerelemente (10a, 10b) in Form von Wellen und jeweils an den Wellen angeordneten Seilzügen (14a, 14b) gebildet sind,
wobei die Verschlusselemente (4a, 4b) und die Führungselemente (8a, 8b) derart zueinander angeordnet und von den Steuerelementen (10a, 10b) steuerbar sind, dass Lufteinlässe (6) in einem Kraftfahrzeug durch die Verschlusselemente (4a, 4b) entlang einer Fahrzeugbreite (B) öffenbar und verschließbar sind, wobei gleichzeitig zwei entlang einer Fahrzeugbreite (B) gegenüberliegend voneinander angeordnete Lufteinlässe (6) durch die Verschlusselemente (4a, 4b) öffenbar und verschließbar sind,
wobei die Verschlusselemente (4a, 4b) und die Führungselemente (8a, 8b) derart zueinander angeordnet und von den Steuerelementen (10a, 10b) steuerbar sind, dass die Verschlusselemente (4a, 4b) während einer Öffnungsbewegung von der Fahrzeugmitte (M) zu den Fahrzeugaußenbereichen (A1, A2) hin und während einer Schließbewegung von den Fahrzeugaußenbereichen (A1, A2) zur Fahrzeugmitte (M) hin bewegbar sind,
**dadurch gekennzeichnet, dass**
das zweite Steuerelement (10b) zum Öffnen der Verschlusselemente (4a, 4b) vorgesehen ist, wobei das zweite Steuerelement (10b) derart mit den Verschlusselementen (4a, 4b) verbunden ist, dass die Verschlusselemente (4a, 4b) während einer Öffnungsbewegung auf die Führungselemente (8a, 8b) aufwickelbar sind, während die Seilzüge (14b) des zweiten Steuerelementes (10b) zumindest teilweise von dem zweiten Steuerelement (10b) abwickelbar sind.

2. Vorrichtung nach Anspruch 1,
**dadurch gekennzeichnet,**
**dass** die Verschlusselemente (4a, 4b) in Form eines Textils gebildet sind.

3. Vorrichtung nach Anspruch 1 oder 2,
**dadurch gekennzeichnet,**
**dass** die Verschlusselemente (4a, 4b) endseitig gekederte Abschnitte zur Herstellung einer stabilen Verbindung mit den Führungselementen (8a, 8b) aufweisen, wobei die Abschnitte vorzugsweise zylinderförmig gekedert sind.

4. Vorrichtung nach einem der vorangehenden Ansprüche,
**dadurch gekennzeichnet,**
**dass** die Führungselemente (8a, 8b) in Form von Wickelwellen gebildet sind, auf die die Verschlusselemente (4a, 4b) während einer Öffnungsbewegung aufwickelbar sind und von der die Verschlusselemente (4a, 4b) während einer Schließbewegung abwickelbar sind.

5. Vorrichtung nach einem der vorangehenden Ansprüche,
**dadurch gekennzeichnet,**
**dass** die Führungselemente (8a, 8b) eine längsseitig angeordnete Ausnehmung zur Einführung der Verschlusselemente (4a, 4b) aufweisen, wobei die Ausnehmung vorzugsweise eine Verjüngung zur Fixierung der Verschlusselemente (4a, 4b) umfasst.

6. Vorrichtung nach einem der vorangehenden Ansprüche,
**dadurch gekennzeichnet,**
**dass** die Führungselemente (8a, 8b) an den Außenbereichen (A1, A2) der Vorrichtung (2) angeordnet sind, wobei die Führungselemente (8a, 8b) vorzugsweise denselben Abstand zur Mitte (M) der Vorrichtung (2) aufweisen.

7. Vorrichtung nach einem der Ansprüche 4 bis 6,
**dadurch gekennzeichnet,**
**dass** zwei Seilzüge (14a) für das erste Steuerelement (10a) und zwei Seilzüge (14b) für das zweite Steuerelement (10b) vorgesehen sind.

8. Vorrichtung nach Anspruch 7,
**dadurch gekennzeichnet,**
**dass** die Seilzüge (14a, 14b) in Form von Bowdenzügen gebildet sind.

9. Vorrichtung nach Anspruch 7 oder 8,
**dadurch gekennzeichnet,**
**dass** das erste Steuerelement (10a) zum Schließen der Verschlusselemente (4a, 4b) vorgesehen ist, wobei das erste Steuerelement (10a) derart mit den Verschlusselementen (4a, 4b) verbunden ist, dass die Verschlusselemente (4a, 4b) während einer Schließbewegung von den Führungselementen (8a, 8b) abwickelbar sind, während die Seilzüge (14a) des ersten Steuerelementes (10a) auf das erste Steuerelement (10a) aufwickelbar sind.

10. Vorrichtung nach einem der Ansprüche 7 bis 9,
**dadurch gekennzeichnet,**
**dass** das zweite Steuerelement (10b) einen ersten zentral angeordneten Teil und jeweils einen in den Außenbereichen (A1, A2), vorzugsweise an dem ersten und zweiten Führungselement (8a, 8b) angeordneten zweiten Teil aufweist, wobei der erste Teil mit den beiden zweiten Teilen vorzugsweise über Seilzüge (14b) verbunden sind.

11. Vorrichtung nach einem der vorangehenden Ansprüche
**dadurch gekennzeichnet,**
**dass** die Steuerelemente (10) zumindest teilweise konisch geformt, vorzugsweise doppelkonisch geformt sind, wobei ein erster konisch geformter Teil insbesondere entlang eines taillierten Bereichs mit einem zweiten konisch geformten Bereich verbunden ist.

12. Vorrichtung nach einem der vorangehenden Ansprüche,
**dadurch gekennzeichnet,**
eine erste und zweite Abschlussleiste (16a, 16b) zur Befestigung der Verschlusselemente (4a, 4b) an die Steuerelemente (10a, 10b) vorgesehen ist.

13. Vorrichtung nach Anspruch 12,
**dadurch gekennzeichnet,**
**dass** die Abschlussleisten (16a, 16b) ein erstes Abschlussleistenelement (24a) und ein zweites Abschlussleistenelement (24b) zur Befestigung der Verschlusselemente (4a, 4b) aufweisen, wobei die Verschlusselemente (4a, 4b) vorzugsweise zwischen dem ersten und zweiten Abschlussleistenelement (24a, 24b) einklemmbar sind.

14. Vorrichtung nach Anspruch 12 oder 13,
**dadurch gekennzeichnet,**
**dass** die Abschlussleiste (16a, 16b) Clipsverbindungen (29, 30) zur Befestigung der Verschlusselemente (4a, 4b) aufweist, wobei die Clipsverbindungen (29, 30) vorzugsweise in Form von in dem ersten Abschlussleistenelement (24a) angeordneten Clipsen (30) und in dem zweiten Abschlussleistenelement (24b) angeordneten korrespondierenden Ausnehmungen (29) gebildet sind.

15. Vorrichtung nach einem der Ansprüche 12 bis 14,
**dadurch gekennzeichnet,**
**dass** die Abschlussleiste (16a, 16b) ein Zwischenelement (34) zur Stabilisierung einer Führung aufweist, wobei das Zwischenelement (34) vorzugsweise in Form einer T-Profil-förmigen Führung gebildet ist.

16. Vorrichtung nach einem der vorangehenden Ansprüche,
**dadurch gekennzeichnet,**
**dass** ein Zugmittel (18) zur Verbindung der Abschlussleiste (16a, 16b) und/oder der Verschlusselemente (4a, 4b) mit dem ersten Steuerelement (10a) vorgesehen ist, wobei das Zugmittel (18) vorzugsweise in Form eines Federelementes, insbesondere in Form einer Zugfeder gebildet ist.

17. Vorrichtung nach einem der Ansprüche 12 bis 15,
**dadurch gekennzeichnet,**
**dass** die Abschlussleisten (16a, 16b) eine Ausnehmung zur Einführung des Seilzuges (14a) des ersten Steuermittels (10a) aufweisen, wobei die Ausnehmung vorzugsweise gegenüberliegend von einer Clipsverbindungsstelle angeordnet ist.

18. Vorrichtung nach einem der vorangehenden Ansprüche
**dadurch gekennzeichnet,**
**dass** zumindest ein Antriebsmittel (20) zum Antreiben der Steuerelemente (10a, 10b) vorgesehen sind, wobei das Antriebsmittel (20) vorzugsweise in Form eines Aktuators gebildet ist.

19. Vorrichtung nach Anspruch 18,
**dadurch gekennzeichnet,**
**dass** eine zentral angeordnete Antriebswelle (36) vorgesehen ist, wobei die Antriebswelle (36) vorzugsweise das Antriebsmittel (20) und/oder das erste Steuerelement (10a) und/oder zumindest Teile des zweiten Steuerelementes (10b), insbesondere den ersten Teil des zweiten Steuerelementes (10b) umfasst.

20. Vorrichtung nach einem der vorangehenden Ansprüche
**dadurch gekennzeichnet,**
**dass** ein Rahmen (28) und/oder ein Gitter (26) zur Aufnahme und Abstützung des Verschlusselementes (4) vorgesehen ist.

21. Vorrichtung nach einem der vorangehenden Ansprüche
**dadurch gekennzeichnet,**
**dass** eine Detektionseinheit zur Erfassung von Daten zur Bestimmung einer aktuellen Position der Verschlusselemente (4a, 4b) in Bezug auf eine Fahrzeugbreite (B) und/oder einer aktuellen Temperatur und/oder einer aktuellen Zugspannung und/oder einer aktuellen Geschwindigkeit und/oder eines aktuellen Energieverbrauchs vorgesehen ist.

22. Vorrichtung nach einem der Ansprüche 18 bis 21,
**dadurch gekennzeichnet,**
**dass** eine Verarbeitungseinheit zur Aussendung eines Steuerbefehls an das Antriebsmittel (20) auf Basis der erfassten Daten vorgesehen ist.

23. Kraftfahrzeug, umfassend eine Vorrichtung zum Verschließen eines Kraftfahrzeugkühlmoduls nach einem der Ansprüche 1 bis 22.

## Claims

1. Device (2) for closing a motor vehicle cooling module, comprising
- a first and second closure element (4a, 4b) for closing air inlets (6) in a motor vehicle,
- a first and a second guide element (8a, 8b) for guiding the closure elements (4a, 4b) during an opening and a closing movement,
- a first and a second control element (10a, 10b) for controlling an opening and a closing movement of the closure elements (4a, 4b), wherein the control elements (10a, 10b) are formed in the form of shafts and cable pulls (14a, 14b) arranged on the shafts in each case,
wherein the closure elements (4a, 4b) and the guide elements (8a, 8b) are arranged relative to one another and can be controlled by the control elements (10a, 10b) in such a way that air inlets (6) in a motor vehicle can be opened and closed by the closure elements (4a, 4b) along a vehicle width (B), wherein two air inlets (6) arranged opposite one another along a vehicle width (B) can be opened and closed simultaneously by the closure elements (4a, 4b),
wherein the closure elements (4a, 4b) and the guide elements (8a, 8b) are arranged relative to one another and are controllable by the control elements (10a, 10b) in such a way that the closure elements (4a, 4b) are movable from the vehicle center (M) towards the vehicle outer regions (A1, A2) during an opening movement and from the vehicle outer regions (A1, A2) towards the vehicle center (M) during a closing movement,
**characterized in that**
the second control element (10b) is provided for opening the closure elements (4a, 4b), the second control element (10b) being connected to the closure elements (4a, 4b) in such a way that the closure elements (4a, 4b) can be wound onto the guide elements (8a, 8b) during an opening movement, while the cable pulls (14b) of the second control element (10b) can be unwound at least partially from the second control element (10b).

2. Device according to claim 1,
**characterized in that**
the closure elements (4a, 4b) are formed in the shape of a textile.

3. Device according to claim 1 or 2,
**characterized in that**
the closure elements (4a, 4b) have sections which are kedered at the ends for producing a stable connection to the guide elements (8a, 8b), the sections preferably being kedered in a cylindrical shape.

4. Device according to any one of the preceding claims,
**characterized in that**
the guide elements (8a, 8b) are formed in the form of winding shafts onto which the closure elements (4a, 4b) can be wound during an opening movement and from which the closure elements (4a, 4b) can be unwound during a closing movement.

5. Device according to any one of the preceding claims,
**characterized in that**
the guide elements (8a, 8b) have a recess arranged on the longitudinal side for insertion of the closure elements (4a, 4b), the recess preferably comprising a taper for fixing the closure elements (4a, 4b).

6. Device according to any one of the preceding claims,
**characterized in that**
the guide elements (8a, 8b) are arranged on the outer regions (A1, A2) of the device (2), the guide elements (8a, 8b) preferably being at the same distance from the center (M) of the device (2).

7. Device according to any one of claims 4 to 6,
**characterized in that**
two cable pulls (14a) are provided for the first control element (10a) and two cable pulls (14b) for the second control element (10b).

8. Device according to claim 7,
**characterized in that**
the cable pulls (14a, 14b) are formed in the form of Bowden cables.

9. Device according to claim 7 or 8,
**characterized in that**
the first control element (10a) is provided for closing the closure elements (4a, 4b), the first control element (10a) being connected to the closure elements (4a, 4b) in such a way that the closure elements (4a, 4b) can be unwound from the guide elements (8a, 8b) during a closing movement, while the cable pulls (14a) of the first control element (10a) can be wound onto the first control element (10a).

10. Device according to any one of claims 7 to 9,
**characterized in that**
the second control element (10b) has a first centrally arranged part and in each case a second part arranged in the outer regions (A1, A2), preferably on the first and second guide element (8a, 8b), the first part being connected to the two second parts preferably via cable pulls (14b).

11. Device according to any one of the preceding claims
**characterized in that**
the control elements (10) are at least partially conically shaped, preferably double conically shaped, a first conically shaped part being connected, in particular along a waisted region, to a second conically shaped region.

12. Device according to any one of the preceding claims,
**characterized in that**
first and second end strips (16a, 16b) are provided for securing the closure elements (4a, 4b) to the control elements (10a, 10b).

13. Device according to claim 12,
**characterized in that**
the end strips (16a, 16b) have a first end strip element (24a) and a second end strip element (24b) for fastening the closure elements (4a, 4b), it being possible for the closure elements (4a, 4b) preferably to be clamped between the first and second end strip elements (24a, 24b).

14. Device according to claim 12 or 13,
**characterized in that**
the closing strip (16a, 16b) has clip connections (29, 30) for fastening the closure elements (4a, 4b), the clip connections (29, 30) preferably being formed in the form of clips (30) arranged in the first closing strip element (24a) and corresponding recesses (29) arranged in the second closing strip element (24b).

15. Device according to any one of claims 12 to 14,
**characterized in that**
the end strip (16a, 16b) has an intermediate element (34) for stabilizing a guide, the intermediate element (34) preferably being formed in the form of a T-profile-shaped guide.

16. Device according to any one of the preceding claims,
**characterized in that**
a tension means (18) is provided for connecting the end strip (16a, 16b) and/or the closure elements (4a, 4b) to the first control element (10a), the tension means (18) preferably being formed in the form of a spring element, in particular in the form of a tension spring.

17. Device according to any one of claims 12 to 15,
**characterized in that**
the end strips (16a, 16b) have a recess for inserting the cable pulls (14a) of the first control means (10a), the recess preferably being arranged opposite a clip connection point.

18. Device according to any one of the preceding claims
**characterized in that**
at least one drive means (20) is provided for driving the control elements (10a, 10b), the drive means (20) preferably being formed in the form of an actuator.

19. Device according to claim 18,
**characterized in that**
a centrally arranged drive shaft (36) is provided, the drive shaft (36) preferably comprising the drive means (20) and/or the first control element (10a) and/or at least parts of the second control element (1 0b), in particular the first part of the second control element (10b).

20. Device according to any one of the preceding claims
**characterized in that**
a frame (28) and/or a grid (26) is provided for receiving and supporting the closure element (4).

21. Device according to any one of the preceding claims
**characterized in that**
a detection unit is provided for acquiring data for determining a current position of the closure elements (4a, 4b) with respect to a vehicle width (B) and/or a current temperature and/or a current tensile stress and/or a current speed and/or a current energy consumption.

22. Device according to any one of claims 18 to 21,
**characterized in that**
a processing unit is provided for sending a control command to the drive means (20) on the basis of the acquired data.

23. A motor vehicle comprising a device for closing a
motor vehicle cooling module according to any one of claims 1 to 22.

## Revendications

1. Dispositif (2) de fermeture d'un module de refroidissement de véhicule automobile, comprenant
- un premier et un deuxième élément de fermeture (4a, 4b) pour fermer des entrées d'air (6) dans un véhicule automobile,
- un premier et un deuxième élément de guidage (8a, 8b) pour guider les éléments de fermeture (4a, 4b) pendant un mouvement d'ouverture et un mouvement de fermeture,
- un premier et un deuxième élément de commande (10a, 10b) pour la commande d'un mouvement d'ouverture et d'un mouvement de fermeture des éléments de fermeture (4a, 4b), les éléments de commande (10a, 10b) étant formés sous forme d'arbres et de câbles de traction (14a, 14b) disposés respectivement sur les arbres,
dans lequel les éléments de fermeture (4a, 4b) et les éléments de guidage (8a, 8b) sont disposés les uns par rapport aux autres et peuvent être commandés par les éléments de commande (10a, 10b) de telle sorte que des entrées d'air (6) dans un véhicule automobile soient fermées par les éléments de fermeture (4a, 4b) le long d'une largeur de véhicule (B), deux entrées d'air (6) disposées en face l'une de l'autre le long d'une largeur de véhicule (B) pouvant être ouvertes et fermées simultanément par les éléments de fermeture (4a, 4b),
les éléments de fermeture (4a, 4b) et les éléments de guidage (8a, 8b) étant disposés les uns par rapport aux autres et pouvant être commandés par les éléments de commande (10a, 10b) de telle sorte que les éléments de fermeture (4a, 4b) peuvent être déplacés pendant un mouvement d'ouverture depuis le centre du véhicule (M) vers les zones extérieures du véhicule (A1, A2) et pendant un mouvement de fermeture depuis les zones extérieures du véhicule (A1, A2) vers le centre du véhicule (M),
**caractérisé en ce que**
le deuxième élément de commande (10b) est prévu pour ouvrir les éléments de fermeture (4a, 4b), le deuxième élément de commande (10b) étant relié aux éléments de fermeture (4a, 4b) de telle sorte que les éléments de fermeture (4a, 4b) peuvent être enroulés sur les éléments de guidage (8a, 8b) pendant un mouvement d'ouverture, tandis que les câbles de traction (14b) du deuxième élément de commande (10b) peuvent être déroulés au moins partiellement par le deuxième élément de commande (10b).

2. Dispositif selon la revendication 1,
**caractérisé en ce que**
les éléments de fermeture (4a, 4b) sont formés sous la forme d'un textile.

3. Dispositif selon la revendication 1 ou 2,
**caractérisé en ce que**
les éléments de fermeture (4a, 4b) présentent à leurs extrémités des portions rabattues pour réaliser une liaison stable avec les éléments de guidage (8a, 8b), les portions étant de préférence rabattues en forme de cylindre.

4. Dispositif selon l'une des revendications précédentes,
**caractérisé en ce que**
les éléments de guidage (8a, 8b) sont formés sous la forme d'arbres d'enroulement sur lesquels les éléments de fermeture (4a, 4b) peuvent être enroulés pendant un mouvement d'ouverture et à partir desquels les éléments de fermeture (4a, 4b) peuvent être déroulés pendant un mouvement de fermeture.

5. Dispositif selon l'une des revendications précédentes,
**caractérisé en ce que**
les éléments de guidage (8a, 8b) présentent un évidement disposé sur le côté longitudinal pour l'introduction des éléments de fermeture (4a, 4b), l'évidement comprenant de préférence un rétrécissement pour la fixation des éléments de fermeture (4a, 4b).

6. Dispositif selon l'une des revendications précédentes,
**caractérisé en ce que**
les éléments de guidage (8a, 8b) sont disposés sur les zones extérieures (A1, A2) du dispositif (2), les éléments de guidage (8a, 8b) étant de préférence à la même distance du centre (M) du dispositif (2).

7. Dispositif selon l'une quelconque des revendications 4 à 6,
**caractérisé en ce que**
deux câbles de traction (14a) sont prévus pour le premier élément de commande (10a) et deux câbles de traction (14b) pour le deuxième élément de commande (10b).

8. Dispositif selon la revendication 7,
**caractérisé en ce que**
les câbles de traction (14a, 14b) sont formés sous forme de câbles Bowden.

9. Dispositif selon la revendication 7 ou 8,
**caractérisé en ce que**
le premier élément de commande (10a) est prévu pour fermer les éléments de fermeture (4a, 4b), le premier élément de commande (10a) étant relié aux éléments de fermeture (4a, 4b) de telle sorte que les éléments de fermeture (4a, 4b) peuvent être déroulés des éléments de guidage (8a, 8b) pendant un mouvement de fermeture, tandis que les câbles de traction (14a) du premier élément de commande (10a) peuvent être enroulés sur le premier élément de commande (10a).

10. Dispositif selon l'une quelconque des revendications 7 à 9,
**caractérisé en ce que**
le deuxième élément de commande (10b) présente une première partie disposée au centre et respectivement une deuxième partie disposée dans les zones extérieures (A1, A2), de préférence sur le premier et le deuxième élément de guidage (8a, 8b), la première partie étant reliée aux deux deux deuxièmes parties de préférence par des câbles de traction (14b).

11. Dispositif selon l'une des revendications précédentes
**caractérisé en ce que**
les éléments de commande (10) sont au moins partiellement de forme conique, de préférence de forme biconique, une première partie de forme conique étant reliée, en particulier le long d'une zone taillée, à une deuxième zone de forme conique.

12. Dispositif selon l'une des revendications précédentes,
**caractérisé en ce que**
une première et une deuxième baguette de fermeture (16a, 16b) sont prévues pour la fixation des éléments de fermeture (4a, 4b) sur les éléments de commande (10a, 10b).

13. Dispositif selon la revendication 12,
**caractérisé en ce que**
les baguettes de fermeture (16a, 16b) présentent un premier élément de baguette de fermeture (24a) et un deuxième élément de baguette de fermeture (24b) pour la fixation des éléments de fermeture (4a, 4b), les éléments de fermeture (4a, 4b) pouvant de préférence être serrés entre le premier et le deuxième élément de baguette de fermeture (24a, 24b).

14. Dispositif selon la revendication 12 ou 13,
**caractérisé en ce que**
la baguette de fermeture (16a, 16b) présente des liaisons par clips (29, 30) pour la fixation des éléments de fermeture (4a, 4b), les liaisons par clips (29, 30) étant de préférence formées sous forme de clips (30) disposés dans le premier élément de baguette de fermeture (24a) et d'évidements (29) correspondants disposés dans le deuxième élément de baguette de fermeture (24b).

15. Dispositif selon l'une quelconque des revendications 12 à 14,
**caractérisé en ce que**
la baguette de fermeture (16a, 16b) présente un élément intermédiaire (34) pour stabiliser un guidage, l'élément intermédiaire (34) étant de préférence formé sous la forme d'un guidage en forme de T-Profil-.

16. Dispositif selon l'une des revendications précédentes,
**caractérisé en ce qu'**
il est prévu un moyen de traction (18) pour relier la baguette de fermeture (16a, 16b) et/ou les éléments de fermeture (4a, 4b) au premier élément de commande (10a), le moyen de traction (18) étant formé de préférence sous la forme d'un élément à ressort, en particulier sous la forme d'un ressort de traction.

17. Dispositif selon l'une quelconque des revendications 12 à 15,
**caractérisé en ce que**
les baguettes de fermeture (16a, 16b) présentent un évidement pour l'introduction du câble de traction (14a) du premier moyen de commande (10a), l'évidement étant disposé de préférence à l'opposé d'un point de liaison par clip.

18. Dispositif selon l'une des revendications précédentes
**caractérisé en ce qu'**
il est prévu au moins un moyen d'entraînement (20) pour entraîner les éléments de commande (10a, 10b), le moyen d'entraînement (20) étant de préférence formé sous la forme d'un actionneur.

19. Dispositif selon la revendication 18,
**caractérisé en ce qu'**
il est prévu un arbre d'entraînement (36) disposé de manière centrale, l'arbre d'entraînement (36) comprenant de préférence le moyen d'entraînement (20) et/ou le premier élément de commande (10a) et/ou au moins des parties du deuxième élément de commande (10b), en particulier la première partie du deuxième élément de commande (10b).

20. Dispositif selon l'une des revendications précédentes
**caractérisé en ce qu'**
il est prévu un cadre (28) et/ou une grille (26) pour recevoir et soutenir l'élément de fermeture (4).

21. Dispositif selon l'une des revendications précédentes
**caractérisé en ce qu'**
il est prévu une unité de détection pour l'acquisition de données pour déterminer une position actuelle des éléments de fermeture (4a, 4b) par rapport à une largeur de véhicule (B) et/ou une température actuelle et/ou une tension de traction actuelle et/ou une vitesse actuelle et/ou une consommation d'énergie actuelle.

22. Dispositif selon l'une quelconque des revendications 18 à 21,
**caractérisé en ce qu'**
une unité de traitement est prévue pour envoyer un ordre de commande au moyen d'entraînement (20) sur la base des données saisies.

23. Véhicule automobile, comprenant un dispositif de fermeture d'un
module de refroidissement de véhicule automobile selon l'une quelconque des revendications 1 à 22.
